# EUROPÄISCHE PATENTSCHRIFT

(11) **EP 1 244 564 B1**
(45) Veröffentlichungstag und Bekanntmachung des Hinweises auf die Patenterteilung: **02.11.2005**
(21) Anmeldenummer: 00985261.7
(22) Anmeldetag: 21.12.2000
(51) Int. Cl.: B60J 7/057

(54) **ELEKTRISCHE SCHALTUNGSANORDNUNG ZUR STEUERUNG EINES ELEKTROMOTORS IN EINEM KRAFTFAHRZEUG**
ELECTRIC CIRCUIT ARRANGEMENT FOR CONTROLLING AN ELECTROMOTOR IN A MOTOR VEHICLE
CIRCUIT ELECTRIQUE POUR LA COMMANDE D'UN MOTEUR ELECTRIQUE DANS UN VEHICULE

(30) Priorität: 08.01.2000 DE 10000530; 08.01.2000 DE 10000531; 08.01.2000 DE 10000532
(43) Veröffentlichungstag der Anmeldung: 02.10.2002
(73) Patentinhaber: Leopold Kostal GmbH & Co. KG, 58507 Lüdenscheid (DE); Hülsmann, Ulrich, 59387 Ascheberg (DE)
(72) Erfinder: KOCK, Cassian, 45721 Haltern (DE); PASCHEN, Hartmut, 44141 Dortmund (DE)
(86) Internationale Anmeldenummer: PCT/EP2000/013317
(87) Internationale Veröffentlichungsnummer: WO 2001/051302

(56) Entgegenhaltungen:
- EP-A- 0 889 192
- EP-A- 0 931 899
- EP-A- 0 949 400
- DE-A- 3 305 770

## Beschreibung

Die vorliegende Erfindung geht von einer elektrischen Schaltungsanordnung zur Steuerung eines in einem Kraftfahrzeug vorhandenen, elektromotorisch betriebenen Aggregates aus, wobei der ein Aggregateteil zwischen zwei Endpositionen verstellende Elektromotor über zwei durch ein von zwei manuell betätigbaren Schaltvorrichtungen zu beeinflussendes Steuergerät gesteuerte Leistungsschaltorgane in seiner einen oder anderen Drehrichtung betreibbar ist, und wobei in der Ausschaltstellung der beiden Leistungsschaltorgane die beiden Anschlüsse des Elektromotors über die zugehörigen Ausgänge der Leistungsschaltorgane an dem selben Pol (+/-) der Bordspannungsquelle liegen.

Derartige Schaltungsanordnungen sind dazu vorgesehen, ein in einem Kraftfahrzeug vorhandenes, elektrisch betriebenes Aggregat - wie z.B. ein Fenster- bzw. Schiebedachverstellsystem - in einer den Anforderungen bzw. den gesetzlichen Vorschriften entsprechenden Art und Weise zu beeinflussen.

Eine solche elektrische Schaltungsanordnung ist z.B. durch die DE 31 35 888 C2 bekannt geworden. Bei diesem vorbekannten Gegenstand besteht das Problem, daß bei einem in der Schaltungsanordnung auftretenden Fehler - wie z.B. bei einer elektrischen Überbrückung eines Schaltungsteils - eine sogenannte "Gefahrenöffnung" nicht möglich ist, und zwar, weil durch die dort vorgesehenen Komponenten ein weiterer Betrieb des Elektromotors unterbunden wird.

Diese Gefahrenöffnung ist insbesondere bei in Kraftfahrzeugen vorhandenen, elektromotorisch betriebenen Fenster- und Schiebedachverstellsystemen von besonderer Bedeutung z.B. dann, wenn ein Kraftfahrzeug durch Unachtsamkeit oder einen Unfall in ein Gewässer gerät, das so tief ist, daß ein Ausstieg der Insassen nur durch ein Fenster oder durch das Schiebedach möglich ist.

Durch die EP 0 889 192 A2 ist eine gattungsgemäße Schaltungsanordnung bekannt geworden, bei der eine solche Gefahröffnung dadurch ermöglicht ist, daß für jede Verstellrichtung, d.h. sowohl zum Öffnen als auch zum Schließen des Fensters oder Schiebedachs jeweils zwei manuell betätigbare Schalteinrichtungen vorgesehen sind, von denen jeweils eine der einer Richtung zugeordneten Schalteinrichtungen als Umschalter ausgeführt ist, dessen einer Festkontakt, der in der normalerweise offenen Stellung des Schalters durch den beweglichen Kontakt kontaktiert wird, fest mit der Fahrzeugmasse verbunden ist.

Der vorliegenden Erfindung liegt demgegenüber die Aufgabe zugrunde, eine elektrische Schaltungsanordnung der eingangs erwähnten Art mit deutlich geringerem Schaltungsaufwand derart weiterzubilden, daß bei einer z.B. durch Salzwasser hervorgerufenen Überbrückung von Schaltungsteilen noch ein Betrieb des Elektromotors insbesondere in einer bevorzugten, nämlich das Öffnen der betreffenden Fahrzeugöffnung bewirkenden Drehrichtung möglich ist.

Erfindungsgemäß wird die Aufgabe dadurch gelöst, daß das dem Betrieb des Elektromotors in der ein Öffnen der betreffenden Fahrzeugöffnung bewirkenden Drehrichtung zugeordnete Leistungsschaltelement unter Umgehung des Steuergeräts direkt über die zugeordnete Schaltvorrichtung mittels einer Bypass-Diode aktivierbar ist, während das andere Leistungsschaltelement zumindest dann, wenn das erstgenannte Leistungsschaltelement aktiviert ist, blockiert ist.

Vorteilhaft bei einem solchen Aufbau einer elektrischen Schaltungsanordnung ist, daß nur ein relativ geringer Aufwand zur Realisierung einer derartigen Sicherheitsfunktion erforderlich ist.

Weitere besonders günstige Ausgestaltungen des erfindungsgemäßen Gegenstands sind in den Unteransprüchen angegeben und werden anhand der in der Zeichnung dargestellten Ausführungsbeispielen näher erläutert. Dabei zeigen:
- Fig.1 :: eine erste Ausführungsform der erfindungsgemäßen Schaltungsanordnung
- Fig. 2:: eine zweite Ausführungsform der erfindungsgemäßen Schaltungsanordnung unter Verwendung von Transistoren
- Fig. 3:: eine dritte Ausführungsform der erfindungsgemäßen Schaltungsanordnung unter Verwendung von Operationsverstärkern

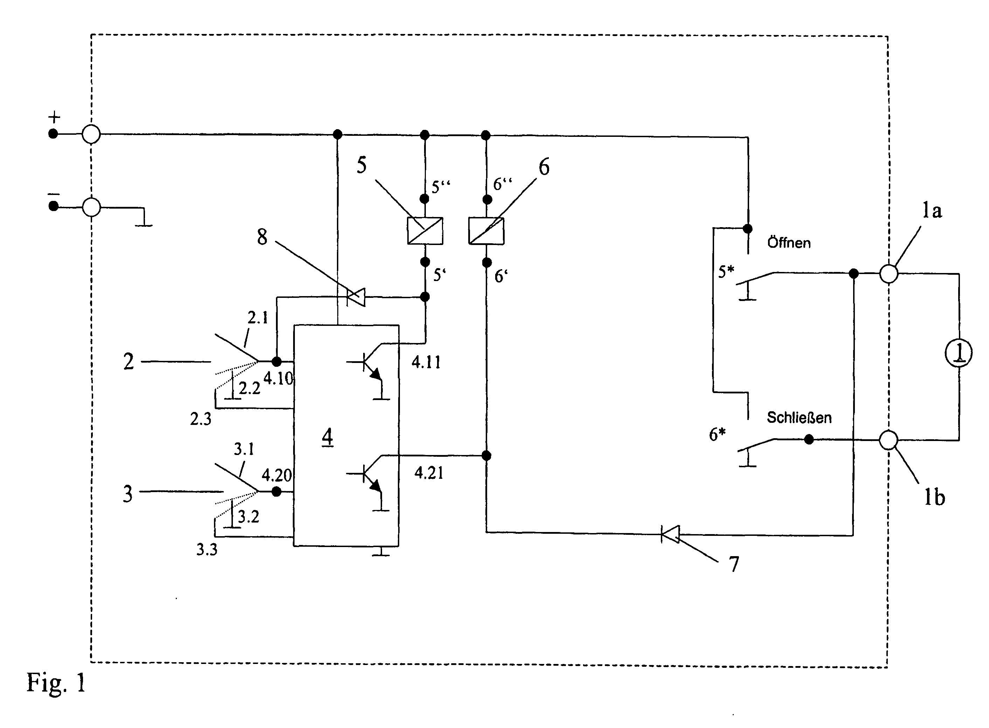

Wie aus der Darstellung der ersten Ausführungsform in Fig. 1 zu sehen, ist bei dieser ein als Mikrocomputer ausgeführtes Steuergerät 4 eingangsseitig mit zwei Schaltvorrichtungen 2 und 3 sowie ausgangsseitig mit jeweils einem Eingang 5' und 6' zweier beispielsweise als elektromechanische Relais ausgeführter Leistungsschaltorgane 5 und 6 verbunden. Die Leistungsschaltorgane 5, 6 sind mit ihrem jeweils anderen Eingang 5", 6" mit dem positiven Pol (+) der Bordspannungsquelle und mit ihren Ausgängen 5*, 6* mit jeweils einem der Anschlüsse 1a und 1b des zur Verstellung z.B. eines Fahrzeugfensters oder -schiebedachs vorgesehenenen Elektromotors 1 verbunden. In der Ausschalt-, d.h. der Ruhestellung der beiden Leistungsschaltorgane 5, 6 sind die Anschlüsse 1a, 1b des Motors 1 über deren Ausgänge 5*, 6* mit dem mit Masse verbundenen negativen Pol (-) der Bordspannungsquelle verbunden. Die beiden Schaltvorrichtungen 2, 3 sind jeweils einer Drehrichtung des Motors 1 und somit der mit dieser verbundenen Bewegungsrichtung des Fensters bzw. Schiebedachs zugeordnet, wobei eine Betätigung der einen Schaltvorrichtung 2 ein Öffnen und eine Betätigung der anderen Schaltvorrichtung 3 ein Schließen der betreffenden Fahrzeugöffnung bewirkt. Bei Betätigung z.B. der letzgenannten Schaltvorrichtung 3 wird deren Schaltkontaktteil 3.1 mit dem Festkontaktteil 3.2 kontaktiert, wodurch der zugehörige Eingang 4.20 des Steuergeräts 4 intern mit dem negativen Pol (-) der Bordspannungsquelle verbunden wird. Dies bewirkt, daß der diesem Eingang 4.20 zugeordnete und mit dem einen Eingang 6' des ebenfalls zugeordneten Leistungsschaltorgans 6 verbundene Ausgang 4.21 durch das Steuergerät 4 ebenfalls mit dem negativen Pol (-) der Bordspannungsquelle verbunden wird. Dieses Leistungsschaltorgan 6 wird dadurch mit Strom beaufschlagt, so daß dessen Ausgang 6* umschaltet und den Anschluß 1b des Elektromotors 1 mit dem positiven Pol (+) der Bordspannungsquelle verbindet, worauf sich dieser zu drehen beginnt und das Fenster bzw. Schiebedach in Schließrichtung bewegt. Der Zustand des Ausgangs 4.21 des Steuergeräts 4 und somit die Motoraktivierung wird dabei entweder solange aufrecht erhalten, wie die Schaltvorrichtung 3 betätigt wird oder über eine im Steuergerät 4 implementierte Automatikfunktion bis zur vollständigen Schließung. Die Aktivierung der Automatikfunktion erfolgt dabei z.B. über einen, durch höhere Kraftbeaufschlagung der Schaltvorrichtung 3 kontaktierbaren, ebenfalls mit einem Eingang des Steuergeräts 4 verbundenen, weiteren Festkontakt 3.3, oder über eine innerhalb des Steuergeräts 4 durchgeführte, zeitliche Auswertung der Dauer der Betätigung der Schaltvorrichtung 3.
Der Öffnungsvorgang des Fensters bzw. Schiebedachs erfolgt bei Betätigung der einen Schaltvorrichtung 2 in analoger Weise zu dem gerade beschriebenen Schließvorgang, wobei sich die bisher beschriebene Funktionalität auf den Normalbetrieb bezieht.

In diesem Normalbetrieb können die Befehle zum Öffnen oder Schließen des Fensters bzw. Schiebedachs statt von den beiden Schaltvorrichtungen 2, 3 z.B. auch von entfernt angeordneten, etwa über ein Bussystem mit dem Steuergerät 4 verbundenen, weiteren Schaltvorrichtungen oder Steuergeräten übermittelt werden.
Anders verhält es sich bei einem Notbetrieb, der z.B. dann erforderlich sein kann, wenn ein Fahrzeug etwa durch einen Unfall in ein salzhaltiges Gewässer eintaucht, wodurch i.a. ein sofortiges Versagen des Steuergeräts 4 verursacht ist. Um jetzt noch eine Notöffnung z.B. des Fensters vornehmen zu können, ist die eine Schaltvorrichtung 2' über eine bei Betätigung dieser Schaltvorrichtung in Durchlaßrichtung betriebene Bypass-Diode 8 direkt mit dem einen Eingang 5' des dieser zugeordneten Leistungsschaltorgans 5 verbunden, das somit bestromt werden kann und durch Umschalten seines Ausgangs 5* und des mit diesem verbundenen Motoranschlusses 1a vom negativen Pol (-) zum positiven Pol (+) der Bordspannungsquelle den Motor für die Öffnungsbewegung in Gang setzt. Gleichzeitig ist über den Ausgang 5* und eine Blockier-Diode 7 der Eingang 6' des der Schließbewegung zugeordneten Leistungsschaltorgans 6 mit dem mit seinem anderen Eingang 6" fest verbundenen positiven Pol (+) verbunden, so daß selbst bei einem Fehler dergestalt, daß ein Kurzschluß des Ausgangs 4.21 gegen Masse, d.h. mit dem negativen Pol (-) auftritt, ein Ansprechen des die Schließbewegung bewirkenden anderen Leistungsschaltorgans 6 wirksam verhindert ist.

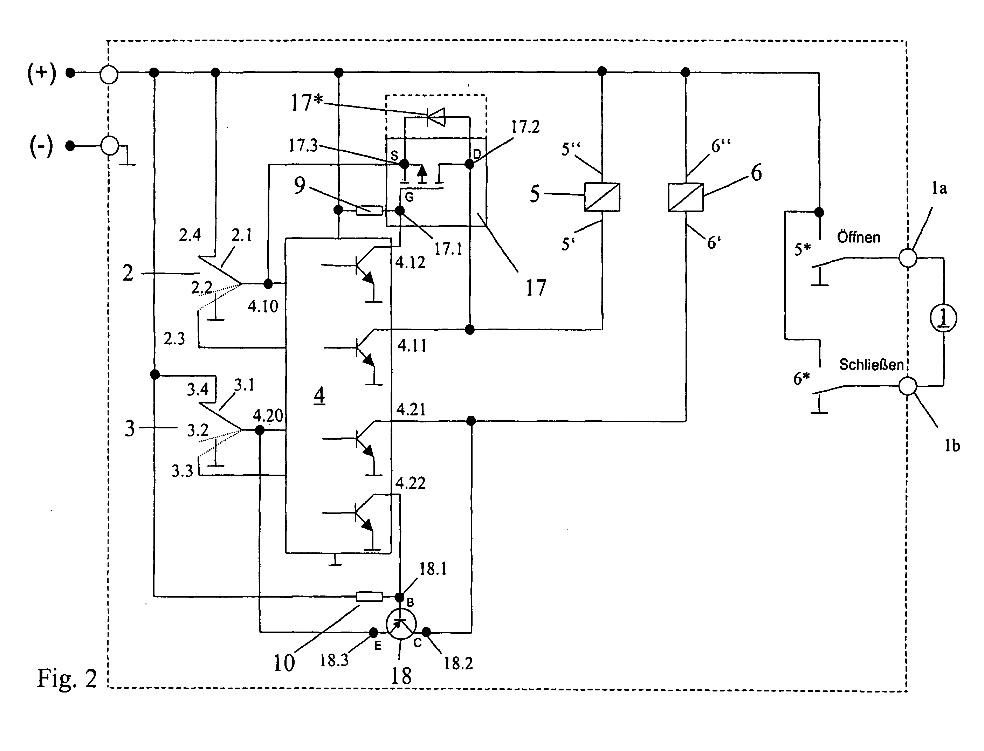

Bei der in Fig. 2 dargestellten zweiten Ausführungsform umfaßt die Schaltungsanordnung ebenfalls ein als Mikrocomputer ausgeführtes Steuergerät 4, dessen Eingänge 4.10 und 4.20 mit zwei Schaltvorrichtungen 2 und 3 verbunden sind. Die Ausgänge 4.11 und 4.21 sind mit jeweils einem Eingang 5' und 6' zweier beispielsweise als elektromechanische Relais ausgeführter Leistungsschaltorgane 5 und 6 verbunden, die mit ihrem jeweils anderen Eingang 5", 6" mit dem positiven Pol (+) der Bordspannungsquelle und mit ihren Ausgängen 5*, 6* mit jeweils einem der Anschlüsse 1a und 1b des zur Verstellung z.B. eines Fahrzeugfensters oder -schiebedachs vorgesehenenen Elektromotors 1 verbunden sind. Zwei weitere Ausgänge 4.12 und 4.22 des Steuergeräts 4 sind mit dem Gate- 17.1 bzw. Basisanschluß 18.1 eines Feldeffekttransistors 17 bzw. eines pnp-Transistors 18 verbunden, deren Drain- 17.2 bzw. Kollektoranschlüsse 18.2 wiederum mit den zuvor erwähnten Ausgängen 4.11 und 4.21 und deren Source- 17.3 bzw. Emitteranschlüsse 18.3 mit den Eingängen 4.10 bzw. 4.20 des Steuergeräts 4 verbunden sind. Dabei sind die mit dem der ein Öffnen der betreffenden Fahrzeugöffnung bewirkenden Drehrichtung zugeordneten Leistungsschaltelement 5 sowie mit dem Feldeffekttransistor 17 verbundenen Ausgänge 4.11 und 4.12 des Steuergeräts 4 dem mit dem Schaltorgan 2 verbundenen Eingang 4.10 desselben zugeordnet, während die mit dem der ein Schließen der betreffenden Fahrzeugöffnung bewirkenden Drehrichtung zugeordneten Leistungsschaltelement 6 sowie mit dem pnp-Transistor 18 verbundenen Ausgänge 4.21 und 4.22 des Steuergeräts 4 dem mit dem Schaltorgan 3 verbundenen Eingang 4.20 desselben zugeordnet sind.
Eine Betätigung der einen Schaltvorrichtung 2 ruft somit ein Öffnen und eine Betätigung der anderen Schaltvorrichtung 3 ein Schließen der betreffenden Fahrzeugöffnung hervor, indem jeweils einer der in der Ausschalt-, d.h. der Ruhestellung der beiden Leistungsschaltorgane 5, 6 über deren Ausgänge 5*, 6* mit dem mit Masse verbundenen negativen Pol (-) der Bordspannungsquelle verbundenen Anschlüsse 1 a, 1 b des Motors 1 mit dem positiven Pol (+) verbunden wird.
Im Ausgangszustand der Schaltungsanordnung, d.h. nach dem Einschalten der Spannungsversorgung und bevor noch eine der Schaltvorrichtungen 2, 3 betätigt wurde, sind die mit den Leistungsschaltorganen 5, 6 verbundenen Ausgänge 4.11 und 4.21 hochohmig, während die mit dem Gate- 17.1 bzw.

Basisanschluß 18.1 der Transistoren 17 bzw. 18 verbundenen Ausgänge 4.12 bzw. 4.22 steuergerätintern mit dem negativen Pol (-) der Bordspannungsquelle verbunden sind. Dadurch sind die Transistoren 17 und 18 durchgeschaltet, so daß die Anschlüsse 5' und 6' der Leistungsschaltorgane 5 und 6 über die Transistoren 17 und 18 sowie die mit diesen in Reihenschaltung verbundenen Schaltvorrichtungen 2 und 3 mit dem positiven Pol (+) der Bordspannungsquelle verbunden sind.

Bei Betätigung z.B. der dem Schließvorgang zugeordneten Schaltvorrichtung 3 wird deren Schaltkontaktteil 3.1 mit dem Festkontaktteil 3.2 kontaktiert, wodurch der zugehörige Eingang 4.20 des Steuergeräts 4 mit dem negativen Pol (-) der Bordspannungsquelle verbunden wird. Dies bewirkt, daß zunächst der diesem Eingang zugeordnete und mit dem Basisanschluß 18.1 des Transistors 18 verbundene Ausgang 4.22 vom negativen Pol (-) der Spannungsquelle getrennt und hochohmig geschaltet wird, wodurch der Transistor gesperrt ist. Dann wird der ebenfalls dem Eingang 4.20 zugeordnete und mit dem einen Eingang 6' des ebenfalls zugeordneten Leistungsschaltorgans 6 verbundene, bis dahin hochohmige Ausgang 4.21 durch das Steuergerät mit dem negativen Pol (-) der Bordspannungsquelle verbunden. Dieses Leistungsschaltorgan 6 wird dadurch mit Strom beaufschlagt, so daß dessen Ausgang 6* umschaltet und den Anschluß 1b des Elektromotors 1 mit dem positiven Pol (+) der Bordspannungsquelle verbindet, worauf sich der Motor zu drehen beginnt und das Fenster bzw. Schiebedach in Schließrichtung bewegt. Der Zustand der Ausgänge 4.21 und 4.22 des Steuergeräts 4 und somit die Motoraktivierung wird dabei entweder solange aufrecht erhalten, wie die Schaltvorrichtung 3 betätigt wird, oder über eine im Steuergerät 4 implementierte Automatikfunktion bis zur vollständigen Schließung. Die Aktivierung der Automatikfunktion erfolgt dabei z.B. über einen, durch höhere Kraftbeaufschlagung der Schaltvorrichtung 3 kontaktierbaren, ebenfalls mit einem Eingang des Steuergeräts 4 verbundenen, weiteren Festkontakt 3.3, oder über eine innerhalb des Steuergeräts 4 durchgeführte, zeitliche Auswertung der Dauer der Betätigung der Schaltvorrichtung 3.

Der Öffnungsvorgang des Fensters bzw. Schiebedachs erfolgt bei Betätigung der einen Schaltvorrichtung 2 in analoger Weise zu dem gerade beschriebenen Schließvorgang, wobei sich die bisher beschriebene Funktionalität auf den Normalbetrieb bezieht.
In diesem Normalbetrieb können die Befehle zum Öffnen oder Schließen des Fensters bzw. Schiebedachs statt von den beiden Schaltvorrichtungen 2, 3 z.B. auch von entfernt angeordneten, etwa über ein Bussystem mit dem Steuergerät 4 verbundenen, weiteren Schaltvorrichtungen oder Steuergeräten übermittelt werden.
Anders verhält es sich bei einem Notbetrieb, der z.B. dann erforderlich sein kann, wenn ein Fahrzeug etwa durch einen Unfall in ein salzhaltiges Gewässer eintaucht, wodurch i.a. ein sofortiges Versagen des Steuergeräts 4 verursacht ist. Zunächst muß in diesem Falle sichergestellt sein, daß keine ungewollte Aktivierung eines der Leistungsschaltorgane 5 oder 6 erfolgt. Dies geschieht durch die Transistoren 17 und 18, deren Source- 17.3 bzw. Emitteranschlüsse 18.3 bei unbetätigten Schaltvorrichtungen 2, 3 direkt mit dem positiven Pol (+) der Bordspannungsquelle verbunden sind, während ihre Gate- 17.1 bzw. Basisanschlüsse 18.1 über Widerstände 9 bzw. 10 mit diesem verbunden sind. Dadurch liegen im Wasser die Gate- 17.1 bzw. Basisanschlüsse 18.1 auf einem niedrigeren Potential als die Source- 17.3 bzw. Emitteranschlüsse 18.3, so daß die Transistoren 17 und 18 auch unabhängig von dem Steuergerät 4 weiterhin durchgeschaltet, und die Anschlüsse 5' und 6' der Leistungsschaltorgane 5 und 6 mit dem positiven Pol (+) der Spannungsquelle verbunden bleiben.

Um jetzt eine Notöffnung z.B. des Fensters vornehmen zu können, ist die eine Schaltvorrichtung 2 über eine bei Betätigung dieser Schaltvorrichtung in Durchlaßrichtung betriebene Bypass-Diode 17* direkt mit dem einen Eingang 5' des dieser zugeordneten Leistungsschaltorgans 5 verbunden, das somit bestromt werden kann und durch Umschalten seines Ausgangs 5* und des mit diesem verbundenen Motoranschlusses 1a vom negativen Pol (-) zum positiven Pol (+) der Bordspannungsquelle den Motor für die Öffnungsbewegung in Gang setzt. In dem hier dargestellten Fall des Einsatzes eines Feldeffekttransistors 17 ist die Bypass-Diode 17* als direkt im Bauteil integrierte, sogenannte Substrat-Diode realisiert. Selbstverständlich ist die gleiche Funktionalität auch durch die Parallellschaltung eines bipolaren (pnp-) Transistors mit einer separaten Diode zu erreichen.
Über den pnp-Transistor 18 und die Schaltvorrichtung 3 ist, wie bereits zuvor beschrieben der Eingang 6' des der Schließbewegung zugeordneten Leistungsschaltorgans 6 mit dem mit seinem anderen Eingang 6" fest verbundenen positiven Pol (+) verbunden, so daß ein Ansprechen des die Schließbewegung bewirkenden anderen Leistungsschaltorgans 6 wirksam verhindert ist. Auch der Transistor 18 muß nicht zwingend als bipolarer Transistor ausgeführt sein, es kann hier auch ein Feldeffekttransistor verwendet werden, was jedoch in diesem Falle durch die integrierte Substrat-Diode Funktionseinschränkungen hinsichtlich einer ggf. vorgesehenen Einklemmschutzvorrichtung bewirken könnte.

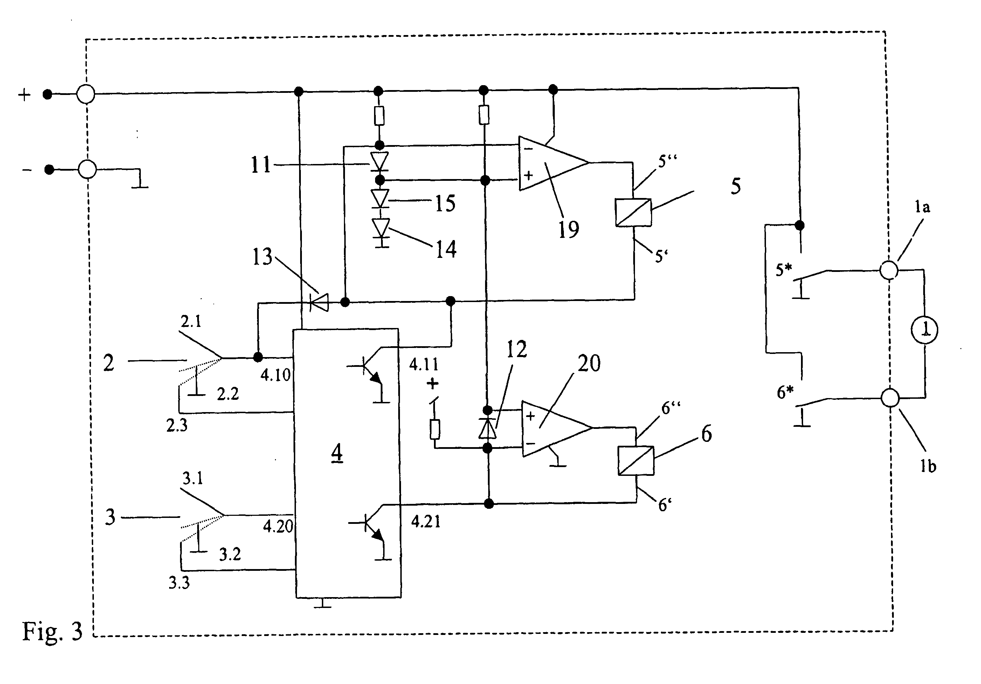

Wie aus der Darstellung der dritten Ausführungsform in Fig. 3 ersichtlich, umfaßt die Schaltungsanordnung auch in diesem Fall ein als Mikrocomputer ausgeführtes Steuergerät 4, dessen Eingänge 4.10 und 4.20 mit zwei Schaltvorrichtungen 2 und 3 verbunden sind. Die Ausgänge 4.11 und 4.21 sind mit jeweils einem Eingang 5' und 6' zweier beispielsweise als elektromechanische Relais ausgeführter Leistungsschaltorgane 5 und 6 verbunden, die mit ihrem jeweils anderen Eingang 5", 6" mit dem Ausgang jeweils eines Operationsverstärkers 19 bzw. 20 und mit ihren Ausgängen 5*, 6* mit jeweils einem der Anschlüsse 1a und 1b des zur Verstellung z.B. eines Fahrzeugfensters oder -schiebedachs vorgesehenenen Elektromotors 1 verbunden sind. Dabei ist der mit dem der ein Öffnen der betreffenden Fahrzeugöffnung bewirkenden Drehrichtung zugeordneten Leistungsschaltelement 5 verbundene Ausgang 4.11 des Steuergeräts 4 dem mit dem Schaltorgan 2 verbundenen Eingang 4.10 desselben zugeordnet, während der mit dem der ein Schließen der betreffenden Fahrzeugöffnung bewirkenden Drehrichtung zugeordneten Leistungsschaltelement 6 verbundene Ausgang 4.21 des Steuergeräts 4 dem mit dem Schaltorgan 3 verbundenen Eingang 4.20 desselben zugeordnet ist.
Eine Betätigung der einen Schaltvorrichtung 2 ruft somit ein Öffnen und eine Betätigung der anderen Schaltvorrichtung 3 ein Schließen der betreffenden Fahrzeugöffnung hervor, indem jeweils einer der in der Ausschalt-, d.h. der Ruhestellung der beiden Leistungsschaltorgane 5, 6 über deren Ausgänge 5*, 6* mit dem mit Masse verbundenen negativen Pol (-) der Bordspannungsquelle verbundenen Anschlüsse 1a, 1b des Motors 1 mit dem positiven Pol (+) verbunden wird.

Die Operationsverstärker 19 und 20 sind mit ihren nicht-invertierenden Eingängen durch die an den in Reihe geschalteten Dioden 14 und 15 auftretenden Schwellspannungen auf ein konstantes Potential von 1,4 Volt gelegt, während im Ausgangszustand der Schaltungsanordnung, d.h. nach dem Einschalten der Spannungsversorgung und bevor noch eine der Schaltvorrichtungen 2, 3 betätigt wurde, die Ausgänge 4.11 und 4.21 des Steuergeräts hochohmig sind, so daß die mit diesen verbundenen Eingänge 5'. 6' der Leistungsschaltorgane 5, 6 sowie die invertierenden Eingänge der Operationsverstärker 19 und 20 durch die mit den vorerwähnten Dioden 14 und 15 jeweils in Reihe geschalteten Dioden 11 bzw. 12 auf ein Potential von 2,1 Volt gelegt sind. Diese gegenüber der an den nicht-invertierenden Eingängen der Operationsverstärker 19, 20 anliegenden Referenzspannung von 1,4 Volt höheren Eingangsspannungen rufen in den Operationsverstärkern 19, 20 einen Schaltzustand hervor, bei dem deren mit den Eingängen 5', 6' der Leistungsschaltorgane 5, 6 verbundene Ausgänge intern mit dem negativen Pol (-) der Bordspannungsquelle verbunden sind.

Bei Betätigung z.B. der dem Schließvorgang zugeordneten Schaltvorrichtung 3 wird deren Schaltkontaktteil 3.1 mit dem Festkontaktteil 3.2 kontaktiert, wodurch der zugehörige Eingang 4.20 des Steuergeräts 4 mit dem negativen Pol (-) der Bordspannungsquelle verbunden wird. Dies bewirkt, daß der diesem Eingang zugeordnete und mit dem einen Eingang 6' des ebenfalls zugeordneten Leistungsschaltorgans 6 verbundene, bis dahin hochohmige Ausgang 4.21 durch das Steuergerät 4 mit dem negativen Pol (-) der Bordspannungsquelle verbunden wird. Der dadurch ebenfalls mit dem negativen Pol (-) der Bordspannungsquelle verbundene invertierende Eingang des Operationsverstärkers 20 liegt somit auf einem niedrigeren Spannungspotential als der mit dem konstanten Referenzpotential von 1,4 Volt beaufschlagte nicht-invertierende Eingang desselben, wodurch dessen mit dem Eingang 6" des Leistungsschaltorgans 6 verbundener Ausgang vom negativen (-) Pol der Bordspannungsquelle getrennt und mit dem positiven Pol (-) verbunden wird. Da gleichzeitig der Eingang 6' des Leistungsschaltorgans 6 durch den Ausgang 4.21 des Steuergeräts 4 mit dem negativen (-) Pol der Bordspannungsquelle verbunden wird, wird dieses Leistungsschaltorgan mit Strom beaufschlagt, so daß dessen Ausgang 6* umschaltet und den Anschluß 1b des Elektromotors 1 mit dem positiven Pol (+) der Bordspannungsquelle verbindet, worauf sich der Motor zu drehen beginnt und das Fenster bzw. Schiebedach in Schließrichtung bewegt. Der Zustand des Ausgangs 4.21 des Steuergeräts 4 und somit die Motoraktivierung wird dabei entweder solange aufrecht erhalten, wie die Schaltvorrichtung 3 betätigt wird, oder über eine im Steuergerät 4 implementierte Automatikfunktion bis zur vollständigen Schließung. Die Aktivierung der Automatikfunktion erfolgt dabei z.B. über einen, durch höhere Kraftbeaufschlagung der Schaltvorrichtung 3 kontaktierbaren, ebenfalls mit einem Eingang des Steuergeräts 4 verbundenen, weiteren Festkontakt 3.3, oder über eine innerhalb des Steuergeräts 4 durchgeführte, zeitliche Auswertung der Dauer der Betätigung der Schaltvorrichtung 3.

Der Öffnungsvorgang des Fensters bzw. Schiebedachs erfolgt bei Betätigung der einen Schaltvorrichtung 2 in analoger Weise zu dem gerade beschriebenen Schließvorgang, wobei sich die bisher beschriebene Funktionalität auf den Normalbetrieb bezieht.
In diesem Normalbetrieb können die Befehle zum Öffnen oder Schließen des Fensters bzw. Schiebedachs statt von den beiden Schaltvorrichtungen 2, 3 z.B. auch von entfernt angeordneten, etwa über ein Bussystem mit dem Steuergerät 4 verbundenen, weiteren Schaltvorrichtungen oder Steuergeräten übermittelt werden.
Anders verhält es sich bei einem Notbetrieb, der z.B. dann erforderlich sein kann, wenn ein Fahrzeug etwa durch einen Unfall in ein salzhaltiges Gewässer eintaucht, wodurch i.a. ein sofortiges Versagen des Steuergeräts 4 verursacht ist. Zunächst muß in diesem Falle sichergestellt sein, daß keine ungewollte Aktivierung eines der Leistungsschaltorgane 5 oder 6 erfolgt. Dies geschieht dadurch, daß die Eingänge 5', 5", 6', 6" der Leistungsschaltorgane 5, 6 fest mit solchen Potentialen verbunden sind, die eine Aktivierung derselben nicht zulassen.

Um jetzt eine Notöffnung z.B. des Fensters vornehmen zu können, ist die eine Schaltvorrichtung 2 über eine bei Betätigung dieser Schaltvorrichtung in Durchlaßrichtung betriebene Bypass-Diode 13 direkt mit dem einen Eingang 5' des dieser zugeordneten Leistungsschaltorgans 5 sowie mit dem invertierenden Eingang des Operationsverstärkers 7 verbunden. Durch die Betätigung der Schaltvorrichtung 2 wird der invertierende Eingang des Operationsverstärkers 19 auf ein durch die Schwellspannung der Bypass-Diode 13 bestimmtes Potential von 0,7 Volt gelegt, das somit niedriger ist als das am nicht-invertierenden Eingang anliegende Referenzpotential von 1,4 Volt, wodurch ein Wechsel des Schaltzustandes des Operationsverstärkers bewirkt wird, so daß das Leistungsschaltorgan bestromt wird, und durch Umschalten seines Ausgangs 5* und des mit diesem verbundenen Motoranschlusses 1a vom negativen Pol (-) zum positiven Pol (+) der Bordspannungsquelle der Motor für die Öffnungsbewegung in Gang gesetzt wird.

## Patentansprüche

1. Elektrische Schaltungsanordnung zur Steuerung eines in einem Kraftfahrzeug vorhandenen, elektromotorisch betriebenen Aggregates, wobei der ein Aggregateteil zwischen zwei Endpositionen verstellende Elektromotor (1) über zwei eingangsseitig einerseits mit dem einen Pol (+) der Bordspannungsquelle verbundene und andererseits durch ein elektronisches, von zwei manuell betätigbaren Schaltvorrichtungen (2, 3) zu beeinflussendes Steuergerät (4) über dessen Ausgänge (4.11, 4.21) mit dem anderen Pol (-) zu verbindende, sowie ausgangsseitig an den beiden Anschlüssen (1a, 1b) des Elektromotors liegende Leistungsschaltorgane (5, 6) in seiner einen oder anderen Drehrichtung betreibbar ist, und wobei in der Ausschaltstellung der beiden Leistungsschaltorgane (5, 6) die beiden Anschlüsse (1a, 1b) des Elektromotors (1) über die zugehörigen Ausgänge (5*, 6*) der Leistungsschaltorgane an dem selben Pol (+/-) der Bordspannungsquelle liegen, **dadurch gekennzeichnet, daß** der eine Eingang (5') des einen Leistungsschaltorgans (5) über eine Bypass-Diode (8) mit der diesem zugeordneten einen Schaltvorrichtung (2) verbunden ist, und daß der eine der beiden Anschlüsse (1a) des Elektromotors (1) über eine Blockier-Diode (7) mit dem einen Eingang (6') des mit seinem Ausgang (6*) dem anderen der beiden Anschlüsse (1b) zugeordneten anderen Leistungsschaltorgans (6) verbunden ist, wobei die Dioden (7) und (8) so gepolt sind, daß bei Betätigung der einen Schaltvorrichtung (2) das zugehörige eine Leistungsschaltorgan (5) mit seinen beiden Eingängen (5') und (5") mit den beiden Polen (+), (-) und das andere Leistungsschaltorgan (6) mit seinen beiden Eingängen (6') und (6") mit ein und demselben Pol (+,-) der Bordspannungsquelle verbunden ist.

2. Elektrische Schaltungsanordnung zur Steuerung eines in einem Kraftfahrzeug vorhandenen, elektromotorisch betriebenen Aggregates, wobei der ein Aggregateteil zwischen zwei Endpositionen verstellende Elektromotor (1) über zwei eingangsseitig einerseits mit dem positiven Pol (+) der Bordspannungsquelle verbundene und andererseits durch ein elektronisches, von zwei manuell betätigbaren Schaltvorrichtungen (2, 3) zu beeinflussendes Steuergerät (4) über dessen Ausgänge (4.11, 4.21) mit dem negativen Pol (-) zu verbindende, sowie ausgangsseitig an den beiden Anschlüssen (1a, 1b) des Elektromotors liegende Leistungsschaltorgane (5, 6) in seiner einen oder anderen Drehrichtung betreibbar ist, **dadurch gekennzeichnet, daß** der eine Eingang (5') des mit seinem Ausgang (5*) dem einen der beiden Anschlüsse (1a) des Elektromotors (1) zugeordneten einen Leistungsschaltorgans (5) über eine Bypass-Diode (17*) mit der diesem einen Leistungsschaltorgan (5) zugeordneten einen Schaltvorrichtung (2) verbunden ist, und daß der eine Eingang (6') des mit seinem Ausgang (6*) dem anderen der beiden Anschlüsse (1b) des Elektromotors (1) zugeordneten anderen Leistungsschaltorgans (6) über einen Transistor (18) mit der diesem anderen Leistungsschaltorgan (6) zugeordneten anderen Schaltvorrichtung (3) verbunden ist, wobei bei unbetätigter Schaltvorrichtung (3) der Transistor (18) durchgeschaltet ist, so daß das andere Leistungsschaltorgan (6) mit seinen beiden Eingängen (6') und (6") mit dem positiven Pol (+) der Bordspannungsquelle verbunden ist.

3. Elektrische Schaltungsanordnung nach Anspruch 2, **dadurch gekennzeichnet, daß** der eine Eingang (5') des einen Leistungsschaltorgans (5) über die Bypass-Diode (17*) mit dem Schaltkontaktteil (2.1) der einen Schaltvorrichtung (2) verbunden ist, und daß der eine Eingang (6') des anderen Leistungsschaltorgans (6) über den Transistor (18) mit dem Schaltkontaktteil (3.1) der anderen Schaltvorrichtung (3) verbunden ist, wobei bei unbetätigter Schaltvorrichtung (3) das Schaltkontaktteil (3.1) mit einem mit dem positiven Pol (+) der Bordspannungsquelle verbundenen Festkontaktteil (3.4) der anderen Schaltvorrichtung (3) kontaktiert ist.

4. Elektrische Schaltungsanordnung nach Anspruch 2 oder 3, **dadurch gekennzeichnet, daß** der zwischen dem einen Eingang (6') des anderen Leistungsschaltorgans (6) und dem Schaltkontaktteil (3.1) der diesem zugeordneten anderen Schaltvorrichtung (3) angeordnete Transistor (18) als pnp-Transistor ausgeführt ist, dessen Basisanschluß (18.1) mit einem zusätzlichen, der anderen Schaltvorrichtung (3) zugeordneten Ausgang (4.22) des Steuergeräts (4) verbunden ist, der bei unbetätigter anderer Schaltvorrichtung (3) mit dem negativen Pol (-) der Spannungsquelle verbunden ist.

5. Elektrische Schaltungsanordnung nach einem der Ansprüche 2 bis 4, **dadurch gekennzeichnet, daß** der eine Eingang (5') des mit seinem Ausgang (5*) dem einen der beiden Anschlüsse (1a) des Elektromotors (1) zugeordneten einen Leistungsschaltorgans (5) über einen in Parallelschaltung zu der Bypass-Diode (17*) angeordneten Transistor (17) mit dem Schaltkontaktteil (2.1) der diesem Leistungsschaltorgan (5) zugeordneten einen Schaltvorrichtung (2) verbunden ist, wobei bei unbetätigter einer Schaltvorrichtung (2) der Transistor (17) durchgeschaltet, und das Schaltkontaktteil (2.1) mit dem mit dem positiven Pol (+) der Bordspannungsquelle verbundenen Festkontaktteil (2.4) der einen Schaltvorrichtung (2) kontaktiert ist, so daß das eine Leistungsschaltorgan (5) mit seinen beiden Eingängen (5') und (5") mit dem positiven Pol (+) der Bordspannungsquelle verbunden ist.

6. Elektrische Schaltungsanordnung nach Anspruch 5, **dadurch gekennzeichnet, daß** der zwischen dem einen Eingang (5') des einen Leistungsschaltorgans (5) und dem Schaltkontaktteil (2.1) der diesem zugeordneten einen Schaltvorrichtung (2) angeordnete Transistor (17) als Feldeffekttransistor ausgeführt ist, dessen Gateanschluß (17.1) mit einem zusätzlichen, der einen Schaltvorrichtung (2) zugeordneten Ausgang (4.12) des Steuergeräts (4) verbunden ist, der bei unbetätigter einer Schaltvorrichtung (2) mit dem negativen Pol (-) der Spannungsquelle verbunden ist, wobei die Bypass-Diode (17*) als Substrat-Diode ein integraler Bestandteil dieses Feldeffekttransistors ist.

7. Elektrische Schaltungsanordnung zur Steuerung eines in einem Kraftfahrzeug vorhandenen, elektromotorisch betriebenen Aggregates, wobei der ein Aggregateteil zwischen zwei Endpositionen verstellende Elektromotor (1) über zwei eingangsseitig einerseits durch ein elektronisches, von zwei manuell betätigbaren Schaltvorrichtungen (2, 3) zu beeinflussendes Steuergerät (4) über dessen Ausgänge (4.11, 4.21) mit dem negativen Pol (-) der Bordspannungsquelle zu verbindende, sowie ausgangsseitig an den beiden Anschlüssen (1a, 1b) des Elektromotors liegende Leistungsschaltorgane (5, 6) in seiner einen oder anderen Drehrichtung betreibbar ist, **dadurch gekennzeichnet, daß** die Leistungsschaltorgane (5, 6) eingangsseitig andererseits durch diesen jeweils zugeordnete Operationsverstärker (19, 20) mit dem positiven (+) Pol der Bordspannungsquelle verbindbar sind, und daß der eine Eingang (5') des mit seinem Ausgang (5*) dem einen der beiden Anschlüsse (1a) des Elektromotors (1) zugeordneten, einen Leistungsschaltorgans (5) über eine Bypass-Diode (13) mit der diesem Leistungsschaltorgan (5) zugeordneten einen Schaltvorrichtung (2) verbunden ist.

8. Elektrische Schaltungsanordnung nach Anspruch 7, **dadurch gekennzeichnet, daß** die Eingänge (6', 6") des mit seinem Ausgang (6*) dem anderen der beiden Anschlüsse (1b) des Elektromotors (1) zugeordneten, anderen Leistungsschaltorgans (6) bei unbetätigter, diesem Leistungsschaltorgan (6) zugeordneter anderer Schaltvorrichtung (3) mit Potentialen verbunden sind, die keine unbeabsichtigte Aktivierung dieses Leistungsschaltorgans (6) zulassen.

9. Elektrische Schaltungsanordnung nach Anspruch 7 oder 8, **dadurch gekennzeichnet, daß** die Eingänge (5', 5") des mit seinem Ausgang (5*) dem einen der beiden Anschlüsse (1a) des Elektromotors (1) zugeordneten, einen Leistungsschaltorgans (5) bei unbetätigter, diesem Leistungsschaltorgan (5) zugeordneter einer Schaltvorrichtung (2) mit Potentialen verbunden sind, die keine unbeabsichtigte Aktivierung dieses Leistungsschaltorgans (5) zulassen.

10. Elektrische Schaltungsanordnung nach einem der Ansprüche 7 bis 9, **dadurch gekennzeichnet, daß** der jeweils eine Eingang (5', 6') des einen oder anderen Leistungsschaltorgans (5, 6) mit der Schwellspannung einer Reihenschaltung von Dioden (14), (15) und (11) bzw. (12) beaufschlagt ist, und der jeweils andere Eingang (5", 6") des einen bzw. anderen Leistungsschaltorgans (5, 6) bei unbetätigter, dem jeweiligen Leistungsschaltorgan (5, 6) jeweils zugeordneter einer oder anderer Schaltvorrichtung (2, 3) durch den Ausgang jeweils eines Operationsverstärkers (19, 20) mit dem negativen Pol (-) der Bordspannungsquelle verbunden ist.

11. Elektrische Schaltungsanordnung nach einem der Ansprüche 1 bis 10, **dadurch gekennzeichnet, daß** in der Ausschaltstellung der beiden Leistungsschaltorgane (5, 6) die beiden Anschlüsse (1a, 1b) des Elektromotors (1) über die zugehörigen Ausgänge (5*, 6*) der Leistungsschaltorgane mit dem negativen Pol (-) der Bordspannungsquelle verbunden sind.

12. Elektrische Schaltungsanordnung nach einem der Ansprüche 1 bis 11, **dadurch gekennzeichnet, daß** zumindest eine der beiden Schaltvorrichtungen (2, 3) ein weiteres, mit einem weiteren Eingang des Steuergeräts (4) verbundenes Festkontaktteil (2.3, 3.3) aufweist, das einer zweiten Einschaltstellung zugeordnet ist, die mit einer höheren als der zum Erreichen der ersten Einschaltstellung erförderlichen Betätigungskraft erreichbar ist.

13. Elektrische Schaltungsanordnung nach einem der Ansprüche 1 bis 12, **dadurch gekennzeichnet, daß** die beiden Leistungsschaltorgane (5, 6) als elektromagnetische Relais ausgeführt sind, die jeweils als Ausgang (5*, 6*) ein mit zwei Festkontaktteilen kooperierendes Schaltkontaktteil aufweisen, wobei die jeweils beiden Festkontaktteile einerseits am positiven Pol (+) und andererseits am negativen Pol (-) der Bordspannungsquelle liegen.

14. Elektrische Schaltungsanordnung nach einem der Ansprüche 1 bis 13, **dadurch gekennzeichnet, daß** das Steuergerät (4) als Mikrocomputer ausgeführt ist, der mit seinen Versorgungseingängen einerseits am positiven Pol (+) der Bordspannungsquelle und andererseits an dem auf Masse liegenden negativen Pol (-) der Bordspannungsquelle angeschlossen ist.

15. Verwendung einer elektrischen Schaltungsanordnung nach einem der Ansprüche 1 bis 14 für motorisch betriebene Fenster- bzw. Schiebedach-Verstellsysteme in einem Kraftfahrzeug.

## Claims

1. Electrical circuit configuration for controlling an electro-motor driven aggregate provided in a motor vehicle, with the electric motor (1) that adjusts one constituent of the aggregate between two end positions being operable in its one direction of rotation or the other by way of two power switching elements (5, 6) that are connected on the one hand on their input side to the one pole (+) of the vehicle voltage source and on the other hand by an electronic control unit (4) that is influenced by two manually actuated operating devices (2, 3) and connected across the two terminals (1a, 1b) of the electric motor to the other pole (-) by way of its outputs 4.11, 4.21) on its output side, and with the two terminals (1a, 1b) of the electric motor connected by way of the associated outputs (5*, 6*) across the same pole (+/-) of the vehicle voltage source of the power switching elements when the two power switching elements (5, 6) are in the open position, **characterised by the fact** that the one input (5') of the one power switching element (5) is connected by way of a bypass diode (8) to the one operating device (2) assigned to the same, and that the one of the two terminals (1a) of the electric motor (1) is connected with its output (6*) to the one input (6') of the other power switching element (6) assigned to the other of the two terminals (1b) by way of a blocking diode (7), for which the diodes (7) and (8) are poled in such a manner that, upon actuating the one operating device (2), the associated one power switching element (5) is connected with its two inputs (5') and 5") to the two poles (+), (-) and the other power switching element (6) is connected with its two inputs (6') and (6") to one and the same pole (+, -) of the vehicle power supply source.

2. Electrical circuit configuration for controlling an electro-motor driven aggregate provided in a motor vehicle, with the electric motor (1) that adjusts the one aggregate constituent between two end positions being operable in its one direction of rotation or the other by way of two power switching elements (5, 6) that are connected on the input side on the one hand with the positive pole (+) of the vehicle power supply source and on the other hand by means of an electronic control unit (4) that is influenced by two manually actuated operating devices (2, 3) and is to be connected by way of its outputs (4.11, 4.21) to the negative pole (-) and to be connected on its output side to the two terminals (1a, 1b) of the electric motor, **characterised by the fact** that the one input (5') of the one power switching element (5) assigned with its output (5*) to the one of the two terminals (1a) of the electric motor (1) is connected by way of a bypass diode (17*) to the one operating device (2) assigned to this power switching element (5), and that the one input (6') of the other power switching element (6) assigned with its output (6*) to the other of the two terminals (1b) is connected by way of a transistor (18) to the other operating device (3) assigned to this other power switching element (6), for which the transistor (18) is switched through when the operating device (3) is not actuated so that the other power switching element (6) is connected with both of its inputs (6') and (6") to the positive pole (+) of the vehicle power supply source.

3. Electrical circuit configuration in accordance with Claim 2, **characterised by** the fact that the one input (5') of the one power switching element (5) is connected by way of the bypass diode (17*) to the switching contact constituent (2.1) of the one operating device (2), and that the one input (6') of the other power switching element (6) is connected by way of the transistor (18) to the switching contact constituent (3.1) of the other operating device (3), for which the switching contact constituent (3.1) is contacted with a fixed contact constituent (3.4) of the other operating device (3) connected to the positive pole (+) of the vehicle power supply source when the operating device (3) is not actuated.

4. Electrical circuit configuration in accordance with Claim 2 or Claim 3, **characterised by the fact** that the transistor (18) arranged between the one input (6') of the other power switching element (6) and the switching contact constituent (3.1) of the other operating device (3) assigned to the same is designed as a pnp transistor whose base terminal (18.1) is connected to an additional output (4.22) of the control unit (4) that is assigned to the other operating device (3) and is connected to the negative pole (-) of the voltage source when the other operating device (3) is not actuated.

5. Electrical circuit configuration in accordance with any of Claims 2 to 4, **characterised by** the fact that the one input (5') of the one power switching element (5) assigned with its output (5*) to the one of the two terminals (1a) of the electric motor (1) is connected to the switching contact constituent (2.1) of the one operating device (2) assigned to this power switching element (5) by way of a transistor (17) arranged in parallel to the bypass diode (17*), for which the transistor (17) switches through when the one operating device (2) is not actuated, and the switching contact constituent (2.1) is contacted with the positive pole (+) of the vehicle power supply source connected to the fixed contact constituent (2.4) of the one operating device (2) so that the one power switching element (5) is connected with both of its inputs (5') and (5") to the positive pole (+) of the vehicle power supply source.

6. Electrical circuit configuration in accordance with Claim 5, **characterised by** the fact that the transistor (17) that is arranged between the one input (5') of the one power switching element (5) and the switching contact constituent (2.1) of the one operating device (2) assigned to the same is designed as a field-effect transistor whose gate terminal (17.1) is connected to an additional output (4.12) of the control unit (4) assigned to the one operating device (2) that is connected to the negative pole (-) of the voltage source when the one operating device (2) is not actuated, for which the bypass diode (17*), being a substrate diode, is an integral component of this field effect transistor.

7. Electrical circuit configuration for controlling an electro-motor driven aggregate provided in a motor vehicle, with the electric motor (1) that adjusts the one aggregate constituent between two end positions being operable in its one direction of rotation or the other by way of two power switching elements (5, 6) to be connected on the input side on the one hand by an electronic control unit (4) that is to be influenced by two manually actuated operating devices (2, 3) and to be connected across its outputs (4.11, 4.21) to the negative pole (-) of the vehicle power supply source and on the output side to the two terminals (1a, 1b) of the electric motor, **characterised by the fact** that the power switching elements (5, 6) on the input side can be connected on the other hand by way of operational amplifiers (19, 20) assigned to the same, respectively, to the positive (+) pole of the vehicle power supply source and that the one input (5') of the one power switching element (5) assigned with its output (5*) to one of the two terminals (1a) of the electric motor (1) is connected by way of a bypass diode (13) to the one operating device (2) assigned to this power switching element (5).

8. Electrical circuit configuration in accordance with Claim 7, **characterised by** the fact that the inputs (6', 6") of the other power switching element (6) assigned with its output (6*) to the other of the two terminals (1b) of the electric motor (1) are connected to potentials that do not admit any unintentional activation of this power switching element (6) when the other operating device (3) assigned to this power switching element (6) is not actuated.

9. Electrical circuit configuration in accordance with Claim 7 or Claim 8, **characterised by the fact** that the inputs (5', 5") of the one power switching element (5) assigned with its output (5*) to one of the two terminals (1a) of the electric motor (1) are connected to potentials that do not admit any unintentional activation of this power switching element (5) when the one operating device (2) assigned to this power switching element (5) is not actuated.

10. Electrical circuit configuration in accordance with any of Claims 7 to 9, **characterised by the fact** that the threshold voltage from a series circuit of diodes (14), (15), and (11) or (12), respectively, is applied to the respective input (5', 6') of the one or the other power switching element (5, 6), and the respective other input (5", 6") of the one or the other power switching element (5, 6) is connected to the negative pole (-) of the vehicle power supply source by way of the output of a respective operational amplifier (19, 20) when the one or the other operating device (2, 3) assigned to the respective power switching element (5, 6) is not actuated.

11. Electrical circuit configuration in accordance with any of Claims 1 to 10, **characterised by the fact** that in the open position of the two power switching elements (5, 6) the two terminals (1a, 1b) of the electric motor (1) are connected to the negative pole (-) of the vehicle power supply source by way of the pertaining outputs (5*, 6*) of the power switching elements.

12. Electrical circuit configuration in accordance with any of Claims 1 to 11, **characterised by the fact** that at least one of the two operating devices (2, 3) features a further fixed contact constituent (2.3, 3.3) that is connected to a further input of the control unit (4) and is assigned to a second closed position that can be achieved using a greater actuating force than that required to achieve the first closed position.

13. Electrical circuit configuration in accordance with any of Claims 1 to 12, **characterised by the fact** that the two power switching elements (5, 6) are designed as electromagnetic relays, each of which features a switching contact constituent cooperating with two fixed contact constituents as its output (5*, 6*), with the respective two fixed contact constituents connected across the positive pole (+) on the one hand and the negative pole (-) on the other hand.

14. Electrical circuit configuration in accordance with any of Claims 1 to 13, **characterised by the fact** that the control unit (4) is executed as a microcomputer that is terminated with its supply inputs on the positive pole (+) of the vehicle power supply source on the one hand and on the negative pole (-) of the vehicle power supply source connected across frame on the other hand.

15. Utilization of an electrical circuit configuration in accordance with any of Claims 1 to 14 for motor-driven adjusting systems for windows or sliding roofs, respectively, in a motor vehicle.

## Revendications

1. Circuit électrique de commutation pour la commande d'un groupe entraîné par moteur électrique, présent dans un véhicule automobile, le moteur électrique (1), déplaçant l'un des composants du groupe entre deux positions finales, pouvant être exploité dans l'une ou l'autre de ses directions de rotation, par l'intermédiaire de deux organes de commutation de puissance (5, 6) reliés, d'une part, côté entrée, à l'un (+) des pôles de la source de tension de bord, et, d'autre part, à relier à l'autre pôle (-) par les sorties (4.11, 4.21) d'un appareil de commande (4) électronique, soumis à l'influence de deux dispositifs de commutation (2, 3) pouvant être actionnés manuellement, ainsi que raccordés, côté sortie, aux deux bornes (1a, 1b) du moteur électrique, le moteur électrique (1), et, dans la position de déconnexion des deux organes de commutation de puissance (5, 6), les deux bornes (1a, 1b) du moteur électrique 1) étant reliées au même pôle (+/-) de la source de tension de bord, par l'intermédiaire des sorties correspondantes (5*, 6*), **caractérisé en ce que** une entrée (5') de l'un des organes de commutation de puissance (5) est reliée par une diode bypass (8) au dispositif de commutation (2) associé à celle-ci, et **en ce que** l'une des deux bornes (1a) du moteur électrique (1) est reliée, par l'intermédiaire d'une diode de blocage (7), à l'une des entrées (6') de l'autre organe de commutation de puissance (6), associé par sa sortie (6*) à l'autre des deux bornes (1b), les diodes (7) et (8) étant polarisées de telle manière que, lors de l'actionnement de l'un des dispositifs de commutation (2), l'organe de commutation de puissance (5) associé est relié, par ses deux entrée (5') et (5") aux deux pôles (+), (-), et l'autre organe de commutation de puissance (6) est relié, par ses deux entrée (6') et (6") au un et même pôle (+,-) de la source de tension de bord.

2. Circuit électrique de commutation pour la commande d'un groupe entraîné par moteur électrique, présent dans un véhicule automobile, le moteur électrique (1), déplaçant l'un des composants du groupe entre deux positions finales, pouvant être exploité dans l'une ou l'autre de ses directions de rotation, par l'intermédiaire de deux organes de commutation de puissance (5, 6) reliés, d'une part, côté entrée, au pôle positif (+) de la source de tension de bord, et, d'autre part, à relier au pôle négatif (-) par les sorties (4.11, 4.21) d'un appareil de commande (4) électronique, soumis à l'influence de deux dispositifs de commutation (2, 3) pouvant être actionnés manuellement, ainsi que raccordés, côté sortie, aux deux bornes (1a, 1b) du moteur électrique, **caractérisé en ce que** l'entrée (5') de l'organe de commutation de puissance (5), associé, par sa sortie (5*), à l'une (1a) des deux bornes du moteur électrique (1), est reliée, par l'intermédiaire d'une diode bypass (17*) au dispositif de commutation (2) associé à cet organe de commutation de puissance (5), et **en ce que** l'entrée (6') de l'autre organe de commutation de puissance (6), associé, par sa sortie (6*), à l'autre (1b) des deux bornes du moteur électrique (1), est relié, par l'intermédiaire d'un transistor (18), à l'autre dispositif de commutation (3), associé à cet autre organe de commutation de puissance (6), le transistor (18) étant connecté, lorsque le dispositif de commutation (3) n'est pas activé, de telle manière que l'autre organe de commutation de puissance (6) se trouve relié, par ses deux entrées (6') et (6") au pôle positif (+) de la source de tension de bord.

3. Circuit de commutation selon la revendication 2, **caractérisé en ce que** l'entrée (5') de l'un des organes de commutation de puissance (5) est reliée, par l'intermédiaire de la diode de dérivation (17*), à l'élément de contact (2.1) du dispositif de commutation (2), et **en ce que** l'entrée (6') de l'autre organe de commutation de puissance (6) est reliée, par l'intermédiaire du transistor (18), à l'élément de contact (3.1) de l'autre dispositif de commutation (3), l'élément de contact (3.1) étant en contact avec l'élément de contact fixe (3.4) de l'autre dispositif de commutation (3), relié au pôle positif (+) de la source de courant de bord, quand le dispositif de commutation (3) n'est pas activé.

4. Circuit de commutation selon la revendication 2 ou 3, **caractérisé en ce que** le transistor (18), disposé entre l'entrée (6') de l'autre organe de commutation de puissance (6) et le contact de commutation (3.1) de l'autre dispositif de commutation (3) associé à celui-ci, est réalisé en tant que transistor pnp dont le raccord de base (18.1) est relié à une sortie supplémentaire (4.22) de l'appareil de commande (4), associée à l'autre dispositif de commutation (3), qui est reliée au pôle négatif (-) de la source de tension.

5. Circuit de commutation selon l'une des revendications 2 à 4, **caractérisé en ce que** l'entrée (5') de l'organe de commutation de puissance (5), associé, par sa sortie (5*), à l'une (1a) des deux bornes du moteur électrique (1), est reliée, par l'intermédiaire d'un transistor agencé en parallèle par rapport à la diode de dérivation (17*), à l'élément de contact de commutation (2.1) du dispositif de commutation (2), associé à cet organe de commutation de puissance (5), le transistor (17) étant connecté, quand un dispositif de commutation (2) n'est pas activé, et l'élément de contact de commutation (2.1) étant en contact avec l'élément de contact fixe (2.4), relié au pôle positif (+) de la source de tension de bord, de telle manière qu'un organe de commutation de puissance (5) se trouve relié, par ses deux entrées (5') et (5") au pôle positif (+) de la source de tension de bord.

6. Circuit de commutation selon la revendication 5, **caractérisé en ce que** le transistor (17), disposé entre l'entrée (5') de l'un (5) des organes de commutation de puissance et le contact de commutation (2.1) de l'un (2) des dispositifs de commutation associé à celui-ci, est réalisé en tant que transistor à effet de champ, dont le raccord de grille (17.1) est relié à une sortie supplémentaire (4.12) de l'appareil de commande (4), associée à l'un (2) des dispositifs de commutation, qui est reliée au pôle négatif (-) de la source de tension, la diode de dérivation (17*), en tant que diode substrat, étant un composant intégral de ce transistor à effet de champ.

7. Circuit électrique de commutation pour la commande d'un groupe entraîné par moteur électrique, présent dans un véhicule automobile, le moteur électrique (1), déplaçant l'un des composants du groupe entre deux positions finales, pouvant être exploité dans l'une ou l'autre de ses directions de rotation, par l'intermédiaire de deux organes de commutation de puissance (5, 6), à relier, d'une part, côté entrée, au pôle négatif (-) de la source de tension de bord, par les sorties (4.11, 4.21) d'un appareil de commande (4) électronique, soumis à l'influence de deux dispositifs de commutation (2, 3) pouvant être actionnés manuellement, ainsi que raccordés, côté sortie, aux deux bornes (1a, 1b) du moteur électrique, **caractérisé en ce que** les organes de commutation de puissance (5, 6), côté entrée, peuvent être, d'autre part, reliés chacun par cet amplificateur opérationnel respectif (19, 20) au pôle positif (+) de la source de tension de bord, et **en ce qu'**une entrée (5') d'un organe de commutation de puissance (5), associé, par sa sortie (5*) à l'une (1a) des deux bornes du moteur électrique (1), est relié, par l'intermédiaire d'une diode de dérivation (13), au dispositif de commutation (2) associé à cet organe de commutation de puissance (5).

8. Circuit de commutation selon la revendication 7, **caractérisé en ce que** les entrées (6', 6") de l'autre organe de commutation de puissance (6), associé, par sa sortie (6*) à l'autre (1b) des deux bornes du moteur électrique (1), sont reliées, quand un autre dispositif de commutation (3), associé à cet organe de commutation de puissance (6) n'est pas actionnés, à des potentiels qui n'autorisent aucune activation accidentelle de cet organe de commutation de puissance (6).

9. Circuit de commutation selon la revendication 7 ou 8, **caractérisé en ce que** les entrées (5', 5") d'un organe de commutation de puissance (5), associé, par sa sortie (5*) à l'une (1a) des deux bornes du moteur électrique (1), sont reliées, quand un autre dispositif de commutation (2), associé à cet organe de commutation de puissance (5) n'est pas actionnés, à des potentiels qui n'autorisent aucune activation intempestive de cet organe de commutation de puissance (5).

10. Circuit de commutation selon l'une des revendications 7 à 9, **caractérisé en ce que** l'une des entrées respectives (5', 6') de l'un ou de l'autre organe de commutation de puissance (5, 6) est soumise à la tension de seuil d'un montage en série de diode (14), (15) et (11) resp. (12), et que l'autre entrée (5", 6") de l'un resp. de l'autre organe de commutation de puissance (5, 6) est reliée respectivement au pôle négatif (-) de la source de tension de bord, par l'intermédiaire de la sortie d'un amplificateur opérationnel (19, 20) respectif, lorsque l'un ou l'autre dispositif de commutation (2, 3), associé au commutateur de puissance respectif (5, 6) n'est pas activé.

11. Circuit de commutation selon l'une des revendications 1 à 10, **caractérisé en ce que,** dans la position de mise hors circuit des deux organes de commutation de puissance (5, 6), les deux bornes (1a, 1b) du moteur électrique (1) sont reliées au pôle négatif (-) de la source de tension de bord, par l'intermédiaire des sorties associées (5*, 6*) des organes de commutation de puissance.

12. Circuit de commutation selon l'une des revendications 1 à 11, **caractérisé en ce que** l'un des deux dispositifs de commutation (2, 3), au moins, présente un autre contact fixe (2.3, 3.3) qui, relié à une autre entrée de l'appareil de commande (4), est associé à une deuxième position de mise en circuit, qui est accessible par une force d'actionnement nécessaire plus élevée que celle nécessaire à l'obtention de la première position de mise en circuit.

13. Circuit de commutation selon l'une des revendications 1 à 12, **caractérisé en ce que** les deux organes de commutation de puissance (5, 6) sont réalisés en tant que relais électromagnétiques qui présentent chacun, comme sortie (5*, 6*), un contact de commutation qui coopère avec deux contacts fixes, les deux contacts fixes respectifs étant reliés, d'une part, au pôle positif (+) de la source de tension de bord et, d'autre part, au pôle négatif(-) de la source de tension de bord mis à la masse.

14. Circuit de commutation selon l'une des revendications 1 à 13, **caractérisé en ce que** l'appareil de commande (4) est réalisé en tant que micro-ordinateur computer qui est relié, par ses entrées d'alimentation, au pôle positif (+) de la source de tension de bord, d'une part, et, d'autre part, au pôle négatif(-) de la source de tension de bord mis à la masse.

15. Utilisation d'un circuit de commutation selon l'une des revendications 1 à 14 pour des système de déplacement de vitre et de toit ouvrant commandés par moteur, dans un véhicule automobile.
